# DEMANDE DE BREVET EUROPEEN

(11) **EP 1 800 999 A1**
(43) Date de publication de la demande: **27.06.2007**
(21) Numéro de dépôt: 06356154.2
(22) Date de dépôt: 22.12.2006
(51) Int. Cl.: B62D 25/08, B60H 1/26

(54) **Ensemble d'auvent**

(30) Priorité: 23.12.2005 FR 0513285
(71) Demandeur: Mécaplast, 98014 Monaco (MC)
(72) Inventeur: Chenaud, David, 01100 Bellignat (FR); Roposte, Dominique, 01460 Geovreissiat (FR); Vincent, Stéphane, 01250 Corveissiat (FR)
(74) Mandataire: Delorme, Nicolas

(57) **Abrégé**

Cet ensemble d'auvent (1) pour un véhicule automobile ayant une partie moteur, protégée par un capot (13), et une partie d'habitacle protégée notamment par un pare-brise (20), peut être positionné entre le bord transversal arrière du capot (13) et la bord transversal avant du pare-brise (20), et comprend un collecteur d'air (2) possédant au moins une patte frangible (6) sur laquelle vient en appui une grille d'auvent (3), une ou plusieurs patte(s) frangible(s) (6) pouvant se casser lors d'un impact excédant une force prédéterminée sur la grille d'auvent (3) pour absorber une partie de l'énergie de l'impact.

## Description

La présente invention concerne un ensemble d'auvent destiné à prendre place à la jonction entre un capot recouvrant le compartiment moteur et un pare-brise d'un véhicule automobile.

Dans l'architecture classique d'un véhicule automobile, la zone comprise entre le capot et le pare brise peut être généralement occupée par un ensemble constitué d'une boîte à eau surmontée d'une grille d'auvent.

La boîte à eau a pour fonction de collecter de l'air à la base du pare-brise et de diriger cet air vers l'habitacle. La boîte à eau a, comme deuxième fonction, de collecter les eaux contenues dans le flux d'air aspiré au travers de la grille d'auvent et d'en assurer l'évacuation.

La boîte à eau, qui s'étend transversalement sur la largeur d'un véhicule, est traditionnellement en appui, à chacune de ses extrémités, au niveau des ailes du véhicule.

La boîte à eau peut intégrer d'autres fonctions comme, par exemple, la réception d'un filtre à pollen et/ou d'un réservoir de liquide de lave glace et/ou une motorisation d'essuie glace.

La boîte à eau est surmontée d'une grille d'auvent dont la fonction est d'empêcher que des corps étrangers, par exemple, des feuilles mortes rentrent dans la boîte à eau.

La grille d'auvent est, ainsi, une pièce généralement en matière plastique qui est, selon l'architecture particulière d'un véhicule, plus ou moins apparente entre le capot et le pare-brise.

L'ensemble d'auvent peut être impliqué dans le cas d'un choc entre un véhicule et un piéton. La dynamique d'un tel choc fait que les jambes du piéton entrent en contact avec le pare-choc du véhicule, le fémur entre en contact avec le bord avant du capot et la tête du piéton percute la zone de jonction entre le capot et la partie inférieure du pare-brise, c'est-à-dire précisément l'ensemble d'auvent.

On voit donc, que la prise en compte de l'ensemble d'auvent dans le traitement d'un choc entre un véhicule et un piéton revêt une importance particulière.

On connaît, par le document FR 2 424 205, une boîte à eau qui prend en compte un impact avec un piéton. Dans ce cas, la boîte à eau s'étend transversalement entre les ailes d'un véhicule et présente des zones de rupture qui séparent une partie centrale de la boîte à eau et des platines assurant la fixation de la boîte à eau sur des ailes du véhicule.

En cas de choc, les zones de rupture se cassent en absorbant une partie de l'énergie du choc.

Cette disposition est satisfaisante pour la prise en compte d'un choc avec piéton mais n'est adaptée qu'à des véhicules ayant une boîte à eau de grande dimension.

Or, des contraintes d'architectures de véhicule font qu'il n'est pas toujours possible d'intégrer une boîte à eau de grande dimension.

Par ailleurs, une boîte à eau de grande dimension présente un coût important et une masse importante, ce qui fait qu'il n'est pas toujours souhaitable de recourir à une telle pièce.

Dans cette problématique, un but de l'invention est de proposer un ensemble d'auvent pour un véhicule ayant une boîte à eau de dimension réduite tout en présentant un comportement limitant un traumatisme subi par un piéton en cas de choc avec un véhicule.

L'invention a pour objet pour un ensemble d'auvent pour un véhicule automobile ayant une partie moteur, protégée par un capot, et une partie d'habitacle protégée notamment par un pare-brise, pouvant être positionné entre le bord transversal arrière du capot et le bord transversal avant du pare-brise ; cet ensemble d'auvent comprend un collecteur d'air possédant au moins une patte frangible sur laquelle vient en appui une grille d'auvent, une ou plusieurs patte(s) frangible(s) pouvant se casser lors d'un impact excédant une force prédéterminée sur la grille d'auvent pour absorber une partie de l'énergie de l'impact.

Selon l'invention, il est prévu que la grille d'auvent que la tête d'un piéton risque de heurter lors d'un choc, puisse s'affaisser et ainsi absorber une partie de l'énergie de l'impact. Cet affaissement est rendu possible par le fait que la grille d'auvent est en appui sur au moins une patte frangible. On note que le collecteur sur lequel la grille d'auvent repose est fixé au tablier sans s'étendre transversalement d'une aile à l'autre d'un véhicule.

Selon une forme de réalisation, la grille d'auvent présente un corps dont un bord arrière peut venir en appui contre la base du pare brise, et une poutre transversale accolée au corps et en ce que un profilé d'étanchéité est interposé entre la poutre transversale et le capot lorsqu'il est en position fermée.

Cette disposition s'avère tout à fait adaptée pour réaliser l'étanchéité entre la partie moteur du véhicule et l'habitacle. Cette étanchéité est tout à fait cruciale pour éviter que des gaz émanant du moteur ne s'introduisent dans l'habitacle.

Selon une disposition, la poutre transversale peut présenter une nervure sur laquelle est chaussée le profilé d'étanchéité.

Il peut également être envisagé que le capot embarque sur sa face interne le profilé d'étanchéité.

Selon une disposition avantageuse, la poutre transversale peut être en appui sur au moins une patte frangible. Ainsi, la patte frangible supporte la partie de la grille d'auvent qui présente la plus grande rigidité ; de ce fait, en cas d'impact, la rupture d'une ou plusieurs patte(s) frangible(s) intervient très rapidement.

Selon une possibilité, la poutre transversale peut présenter une section en C.

De plus, la poutre transversale peut présenter une pluralité de nervures orientées dans la direction d'appui du capot, de façon à augmenter la rigidité de la partie transversale et à fournir ainsi un contre appui pour le profilé d'étanchéité.

Pour parfaire l'étanchéité, le corps de la grille d'auvent peut être ceinturé par un joint d'étanchéité sur ses bords arrière et latéraux.

Selon une possibilité, le collecteur peut présenter une structure tubulaire coudée ayant une extrémité d'entrée et une extrémité de sortie, l'extrémité d'entrée se raccordant à une prise d'air ménagée dans la grille d'auvent et l'extrémité de sortie pouvant se raccorder à un ensemble de ventilation de l'habitacle ou à une ouverture pratiquée dans le tablier pouvant conduire à un ensemble de ventilation de l'habitacle.

La prise d'air peut être partiellement obturée par des ouies, pour empêcher l'intrusion de corps étranger dans le collecteur.

Des moyens d'étanchéité sont interposés entre la grille d'auvent et l'extrémité d'entrée du collecteur, ces moyens d'étanchéité pouvant absorber un déplacement de la grille d'auvent en direction du collecteur.

De préférence, la grille d'auvent présente des moyens de fixation sur le véhicule à chacune de ses extrémités autorisant un degré de liberté dans une direction transversale. Ainsi, les fixations latérales de la grille d'auvent ne s'opposent pas à son affaissement lors d'un impact.

Selon une possibilité, les moyens de fixation consistent en une lumière oblongue pratiquée à chaque extrémité de la poutre dans laquelle peut être engagée un rivet ou un boulon.

Il peut être envisagé que, au moins une des pattes puissent présenter une zone de restriction de matière qui fait que, lorsqu'on applique une pression sur ladite patte, elle se casse au niveau de la zone de restriction de matière.

Pour sa bonne compréhension, l'invention est décrite en référence au dessin ci annexé représentant une forme de réalisation d'un ensemble d'auvent.
Figure 1 est une vue en perspective éclatée de l'ensemble d'auvent selon l'invention,
Figure 2 est une vue assemblée de cet élément,
Figure 3 est une vue en coupe selon III-III de figure 2.

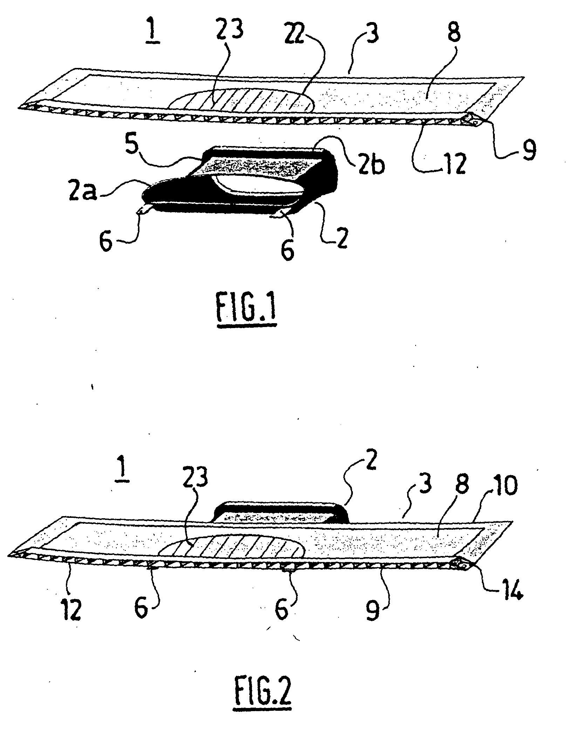

En se référant tout d'abord à la figure 1, il apparaît que l'ensemble d'auvent 1 selon l'invention est constitué essentiellement d'un collecteur 2 et d'une grille d'auvent 3.

Le collecteur 2, dans l'exemple représenté, présente une structure tubulaire coudée avec une extrémité d'entrée 2a et une extrémité de sortie 2b ; dans l'exemple illustré, l'extrémité d'entrée 2a est sensiblement perpendiculaire à l'extrémité de sortie 2b. D'autres configurations peuvent être envisagées en fonction de dispositions architecturales spécifiques.

On peut noter que l'extrémité de sortie est ceinturée par un épaulement 5 qui peut présenter des perçages permettant l'insertion d'éléments de fixation comme par exemple des rivets ou des vis.

Comme cela apparaît sur les figures, des pattes 6 sont adjacentes à l'extrémité d'entrée 2a du collecteur 2. Ces deux pattes 6, qui sont venues de moulage avec le collecteur 2, sont pourvues d'une zone 7 de restriction de matière qui fait que, lorsqu'on applique une pression sur lesdites pattes, elles se cassent au niveau de la zone 7 de restriction de matière. La faculté de rupture des pattes 6 peut être réalisée par d'autres moyens comme par exemple par une arête vive de raccordement entre la patte 6 et le collecteur 2.

La deuxième partie de l'ensemble d'auvent selon l'invention est une grille d'auvent 3 qui comporte, dans l'exemple représenté, un corps 8 auquel est accolée une poutre 9.

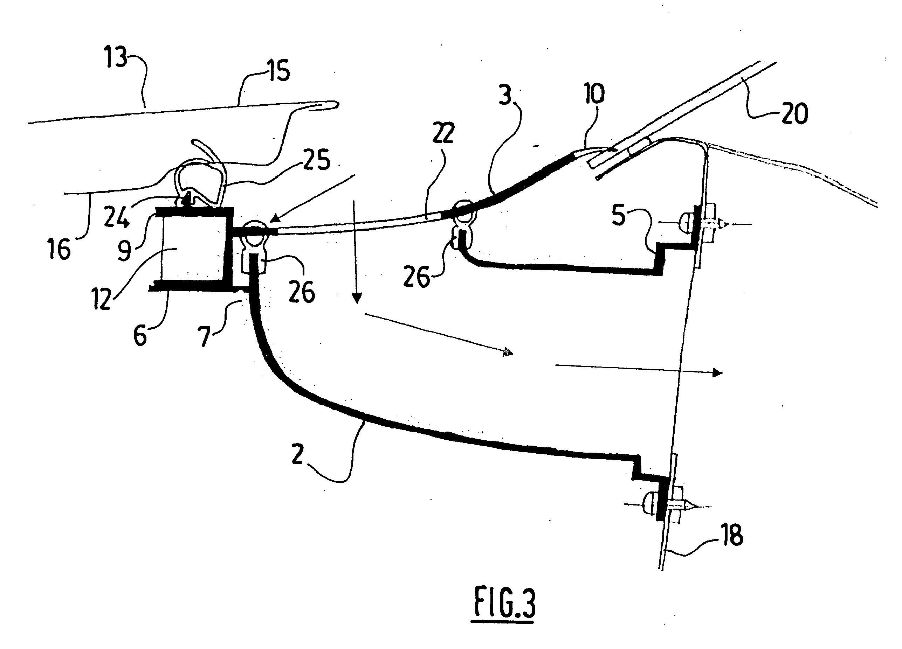

Comme le montrent les figures 1 et 2, le corps 8 peut être ceinturé sur ses bords latéraux et transversal arrière par un joint d'étanchéité 10 qui peut être comoulé avec la grille d'auvent 3 ou peut être rapporté sur celle-ci.

La grille d'auvent 3 présente également une poutre 9 qui, dans l'exemple représenté, est venue de moulage avec le corps 8. Comme le montre plus particulièrement la figure 3, la poutre 9 peut présenter une section transversale en forme de C ; la poutre 9 est pourvue d'une pluralité de nervures de renfort 12 qui sont orientées selon la verticale.

A chaque extrémité de la poutre 9, on note, par ailleurs, la présence d'une ouverture 14 dont la fonction apparaîtra plus loin.

Pour la suite de la description, on se reportera maintenant plus particulièrement à la figure 3 qui montre l'ensemble d'auvent selon l'invention mis en oeuvre dans un véhicule.

La représentation de ce véhicule est limitée d'une part, pour la partie avant du véhicule par un capot 13 dont on peut voir sur la figure la peau extérieure 15 et la doublure intérieure 16, et d'autre part ; pour la partie centrale ou habitacle du véhicule, il est représenté sur la figure 3, le tablier 18 c'est-à-dire la paroi qui sépare l'habitacle du compartiment moteur ainsi que la base d'un pare brise 20.

Dans l'architecture générale du véhicule, l'ensemble d'auvent 1 selon l'invention prend place entre le bord arrière du capot 13 et le bord avant du pare brise 20.

Le collecteur 2 est fixé au tablier 18 grâce, notamment, aux ouvertures dont il est pourvu au travers desquelles des éléments de fixation, comme par exemple des rivets, viennent assurer la fixation du collecteur sur le tablier.

Il est prévu, à cet effet, plusieurs éléments de fixation même si seuls deux sont représentés sur la figure 3.

La fixation du collecteur 2 sur le tablier est tout à fait importante et doit être fermement réalisée puisque le collecteur 2 est en port à faux tandis que la grille d'auvent 3 vient en appui sur ce dernier.

Il est, en outre, important que la liaison entre le collecteur 2 et le tablier 18 soit étanche pour interdire à des gaz provenant du moteur de rentrer dans l'habitacle du véhicule.

La grille d'auvent 3 vient en effet prendre place sur les deux pattes 6 sécables ou frangibles dont le collecteur 2 est pourvu. La grille d'auvent 3 repose au niveau de sa poutre transversale 9 sur les deux pattes 6 frangibles, tandis que le joint d'étanchéité 10 qui borde le bord transversal arrière de la grille d'auvent vient en appui contre la base du pare brise 20.

Bien que cela ne soit pas représenté sur la figure 3, les deux joints latéraux de la grille d'auvent viennent, quant à eux, en appui contre les ailes du véhicule.

Comme cela sera expliqué plus loin, la gestion de l'étanchéité au niveau de la grille d'auvent est tout à fait essentielle.

On note, de plus, que la grille d'auvent 3 est pourvue d'une prise d'air dont la dimension correspond sensiblement à la dimension de l'extrémité d'entrée du collecteur.

De façon classique, cette prise d'air 22 peut être partiellement obturée par des ouies 23 qui empêchent que des corps étrangers s'introduisent dans le collecteur.

La figure 3 montre, par ailleurs, que la grille d'auvent 3 au niveau de sa poutre transversale 9 est pourvue d'une nervure 24 en arête de poisson sur laquelle est chaussé un profilé d'étanchéité 25 qui permettra d'assurer l'étanchéité avec le capot lorsqu'il est fermé. Il peut également être envisagé d'embarquer le profilé d'étanchéité 25 sur la face interne du capot 13. Le profilé d'étanchéité 25 est alors positionné sur le capot 13 de façon à venir en appui sur la poutre transversale 9.

On note également qu'un joint d'étanchéité 26 est interposé entre le collecteur 2 et la grille d'auvent 3.

Comme on l'a vu, la gestion de l'étanchéité revêt une importance particulière car il est essentiel qu'aucun gaz ou aucune odeur en provenance du compartiment moteur ne soit présent dans la zone du véhicule dans laquelle se fait le prélèvement d'air en direction de l'habitacle du véhicule.

Il importe notamment que le profilé d'étanchéité interposé entre la poutre transversale 9 et le capot 13 assure une séparation extrêmement étanche entre le compartiment moteur et la grille d'auvent.

A cet effet, il est prévu qu'il soit écrasé, de manière importante, par le capot 13 lorsque celui-ci est en position fermée. C'est pour cela que la poutre transversale 9 peut être pourvue de nombreuses rainures pour assurer un contre appui au profilé d'étanchéité 25, lorsqu'il est écrasé.

Tout en assurant cette étanchéité, l'ensemble d'auvent selon l'invention présente un comportement peu traumatique en cas de choc avec un piéton ; dans le cas d'un impact sur la grille d'auvent 3, celle-ci qui repose sur des pattes frangibles 6 transmet une partie de l'énergie de l'impact à ces dites pattes frangibles 6 qui se cassent et autorisent alors un basculement ou un affaissement de cette grille d'auvent 3 en direction du collecteur 2. Ce déplacement, sensiblement dans le sens vertical du véhicule, peut se faire sur une course d'environ 40 à 50 millimètres qui correspond sensiblement au débattement qu'autorise le joint d'étanchéité interposé entre le collecteur et la grille d'auvent. La valeur du déplacement de la grille d'auvent est, bien entendu, purement indicative. Le déplacement peut varier en fonction de l'architecture du véhicule ainsi que d'éventuelles normes auxquelles le véhicule devrait se conformer.

Les ouvertures 14 peuvent présenter une forme oblongue orientée transversalement par rapport au véhicule pour offrir un degré de liberté dans cette direction. Ainsi, les moyens de fixation latéraux de la grille d'auvent ne s'opposent pas à l'affaissement ou basculement de celle-ci lors d'un impact. D'autres moyens de fixation latéraux peuvent être envisagés comme par exemple un clip engagé dans un trou rond ; ce clip pouvant se détacher en cas d'impact.

L'invention fournit ainsi un ensemble d'auvent qui se montre non agressif à l'égard d'un piéton qui entrerait en collision avec un véhicule, tout en assurant ses fonctions de collecte d'air et d'étanchéification du compartiment moteur avec une pièce de petite dimension pour assurer la collecte de l'air.

Bien entendu, l'invention n'est pas limitée à la forme de réalisation qui vient d'être décrite, mais elle en embrasse au contraire toutes les formes de réalisation.

## Revendications

1. Ensemble d'auvent (1) pour un véhicule automobile ayant une partie moteur, protégée par un capot (13), et une partie d'habitacle protégée notamment par un pare-brise (20), pouvant être positionné entre le bord transversal arrière du capot (13) et le bord transversal avant du pare-brise (20), **caractérisé en ce que** l'ensemble d'auvent comprend un collecteur d'air (2) possédant au moins une patte frangible (6) sur laquelle vient en appui une grille d'auvent (3), une ou plusieurs patte(s) frangible(s) (6) pouvant se casser lors d'un impact excédant une force prédéterminée sur la grille d'auvent (3) pour absorber une partie de l'énergie de l'impact.

2. Ensemble d'auvent selon la revendication 1, **caractérisé en ce que** la grille d'auvent (3) présente un corps (8) dont un bord arrière peut venir en appui contre la base du pare brise (20), et une poutre transversale (9) accolée au corps (8) et **en ce que** un profilé d'étanchéité (25) est interposé entre la poutre transversale (9) et le capot (13) lorsqu'il est en position fermée.

3. Ensemble d'auvent selon la revendication 2, **caractérisé en ce que** la poutre transversale (9) présente une nervure (24) sur laquelle est chaussée le profilé d'étanchéité (25).

4. Ensemble d'auvent selon la revendication 2, **caractérisé en ce que** le capot (13) embarque sur sa face interne le profilé d'étanchéité (25).

5. Ensemble d'auvent selon l'une des revendications 1 à 4, **caractérisé en ce que** la poutre transversale (9) est en appui sur au moins une patte frangible (6).

6. Ensemble d'auvent selon l'une des revendications 2 à 5, **caractérisé en ce que** la poutre transversale (9) présente une section en C.

7. Ensemble d'auvent selon la revendication 6, **caractérisé en ce que** la poutre transversale (9) présente une pluralité de nervures (12) orientées dans la direction d'appui du capot.

8. Ensemble d'auvent selon l'une des revendications 1 à 7, **caractérisé en ce que** le collecteur (2) présente un structure tubulaire coudée ayant une extrémité d'entrée (2a) et une extrémité de sortie (2b), l'extrémité d'entrée se raccordant à une prise d'air (22) ménagée dans la grille d'auvent (3) et l'extrémité de sortie pouvant se raccorder à un ensemble de ventilation de l'habitacle ou à une ouverture pouvant conduire à un ensemble de ventilation de l'habitacle pratiquée dans un tablier (18) séparant la partie moteur de la partie habitacle.

9. Ensemble d'auvent selon la revendication 8, **caractérisé en ce que** la prise d'air (22) est partiellement obturée par des ouies (23).

10. Ensemble d'auvent selon l'une des revendications 1 à 9, **caractérisé en ce que** des moyens d'étanchéité sont interposés entre la grille d'auvent (3) et l'extrémité d'entrée du collecteur, ces moyens d'étanchéité pouvant absorber un déplacement de la grille d'auvent (3) en direction du collecteur.

11. Ensemble d'auvent selon l'une des revendications 1 à 10, **caractérisé en ce que** la grille d'auvent (3) présente des moyens de fixation sur le véhicule à chacune de ses extrémités autorisant un degré de liberté dans une direction transversale.

12. Ensemble d'auvent selon la revendication 11, **caractérisé en ce que** les moyens de fixation consistent en une lumière oblongue (14) pratiquée à chaque extrémité de la poutre dans laquelle peut être engagée un rivet ou un boulon.

13. Ensemble d'auvent selon l'une des revendications 2 à 12, **caractérisé en ce que** le corps (8) de la grille d'auvent (3) est ceinturé par un joint d'étanchéité sur ses bords arrière et latéraux.

14. Ensemble d'auvent selon l'une des revendications 1 à 13, **caractérisé en ce que**, au moins une des pattes (6) présente une zone (7) de restriction de matière qui fait que, lorsqu'on applique une pression sur lesdites pattes, elles se cassent au niveau de la zone 7 de restriction de matière
